# EUROPEAN PATENT SPECIFICATION

(11) **EP 0 936 058 B1**
(45) Date of publication and mention of the grant of the patent: **13.06.2001**
(21) Application number: 98830062.0
(22) Date of filing: 12.02.1998
(51) Int. Cl.: B30B 15/02, B29C 45/33, B29C 45/26, B22D 17/22

(54) **A die or mould for manufacturing fork-shaped articles**
Form zur Herstellung von gabelförmigen Gegenständen
Moule pour fabriquer des articles en forme de fourche

(43) Date of publication of application: 18.08.1999
(73) Proprietor: G. Baggioli Pressofusione Europe S.r.l., 20154 Milano (IT)
(72) Inventor: Baggioli, Guido, 23900 Lecco (IT)
(74) Representative: Sutto, Luca

(56) References cited:
- GB-A- 1 599 285

## Description

The present invention relates to a die or mould for manufacturing fork-shaped articles, of the type comprising: at least one pair of inner casting dies movable in mutual approach relation and able to be coupled in correspondence with respective junction surfaces mutually matched and opposed; at least one pair of lateral casting dies movable in lateral approach to the inner casting dies and able to be coupled thereto from respectively opposite parts, in correspondence with mutually matched lateral junction surfaces, presented respectively by the lateral casting dies and by the inner casting dies, said inner and said lateral casting dies being movable between an open condition wherein they are mutually distanced and a closed condition wherein they are mutually coupled to define at least one casting cavity presenting at least two terminal portions, reproducing the shape of the arms of the fork-shaped article and internally defined each in one of said lateral casting dies, and an intermediate portion defined between said inner casting dies extending between said terminal portions and reproducing the shape of said connecting bar of the fork-shaped article.

More specifically, in the embodiment whereto particular reference shall be made in the course of the present description, the invention is aimed at the manufacture of arresting forks of the type usually employed for selectively stopping the coiling drums of the devices for rolling up safety belts for motor vehicles and the like.

However, the innovative concepts of the invention can advantageously be exploited for the manufacture of any type of fork-shaped article, i.e. one provided with a pair of distanced arms interconnected by a connecting bar, made of die-cast material or of injection-moulded plastic material, wherein the geometric and dimensional characteristics of the arms must meet rather strict geometric and shape tolerances.

As is well known, the devices for rolling up safety belts usually employed on motor vehicles and the like are fitted with a drum for coiling the belt on whose opposite ends are obtained circumferential teeth operatively engageable by the opposite arms of a locking fork. More specifically, the fork is engaged in a manner allowing it to oscillate to a fixed structure of the coiling device, for instance by means of a pair of hinge pins projecting from the opposite ends of a connecting bar extending between the aforementioned arms. Each of the arms of the fork presents a shaped groove wherein is operatively engaged a command organ which is sensitive to acceleration and/or to other critical parameters to command, if necessary, the coiling drum to lock. The locking action is performed by clutching teeth borne terminally by the arms of the fork element and engaging respectively with the circumferential teeth present on the drum.

Forks of the type described above are generally manufactured in aluminium alloy or other die-cast material. Particular care is taken in designing and manufacturing the dies employed to manufacture the fork which, being part of a device able to intervene in emergency conditions to ensure persons' safety, must meet narrow geometric and shape tolerances to guarantee the proper operation and the reliability of the device itself.

Normally the dies employed for the manufacture of the forks comprise a pair of inner casting dies able to be mutually coupled by mutual approach in correspondence with respective matched junction surfaces, between which are obtained one or more forging cavities each reproducing in negative the conformation of the forks to be manufactured.

More precisely, each pressing cavity is essentially defined by an intermediate portion reproducing the shape of the connecting bar between the arms, terminally connected by parts opposite to two terminal portions reproducing the shape of the arms themselves.

The coupling surfaces of the casting dies essentially join along a plane coinciding with the median plane of main development of each fork. In this circumstance, each of the terminal portions, as well as the intermediate portion of the pressing cavity are essentially subdivided into two semi-parts obtained in the coupling surfaces belonging respectively to one or the other inner casting dies.

The terminal portions of the pressing cavity open on respective outer lateral surfaces of the inner casting dies, against which, from respectively opposite parts, can be coupled corresponding lateral surfaces of at least one pair of lateral casting dies movable perpendicularly with respect to the direction of mutual motion of the inner casting dies. With the die closed, the lateral casting dies act against the inner casting dies to close the pressing cavity in correspondence with the terminal portions thereof. On the coupling surface of each of the lateral casting dies is also obtained a shaped projection, set to define the shaped groove in the corresponding arm of the fork, as well as a possible recess set to define one of the aforesaid hinge pins of the arm itself.

An example of a mould having inner and lateral dies, for producing tube coupling components, is disclosed in GB 1599285 A.

To eliminate inaccuracies due to inevitable mutual displacements between the inner and lateral casting dies, dies have also been manufactured wherein the entire shape of the arms of the fork is obtained in the lateral casting dies, whilst between the inner casting dies is defined only the intermediate portion of the casting cavity, essentially formed by a through channel.

However, any mutual misalignments between the inner casting dies, whose junction surfaces essentially join along the main geometric plane of the fork to be manufactured, are prone to determine different geometric and dimensional imperfections, such as discontinuities and dimensional irregularities in relation to the thickness of the arms and variations in their mutual distance with respect to the nominal values, in addition to other drawbacks such as the formation of burrs on the development plane of the respectively opposite faces of the arms themselves.

To contain imperfections of this kind within acceptable limits, it is necessary adequately to limit the size of the die and, therefore, the productivity of the press whereto the die itself is associated, such productivity being directly proportional to the number of casting cavities present in the die.

It should also be noted that current dies entail long work processes to finish the pieces produced, due to the need to perform several trimming operations in a determined sequence to eliminate the burrs formed both in the plane of extension of the inner lateral surfaces of the arms, and in the coupling plane between the junction surfaces of the inner casting dies.

The main object of the present invention is to overcome the limits and drawbacks of the prior art, considerably improving the productive capacity and the geometric and dimensional precision of the die-cast or injection moulded articles.

This object and others besides which shall be made clearer in the course of the present description, are essentially attained by a die or mould for manufacturing fork-shaped articles, characterised in that the opposed junction surfaces of the inner casting dies extend along a coupling profile that is external with respect to the perimeter development of the terminal portion of the casting cavity.

Additional characteristics and advantages shall be made more evident by the detailed description of a preferred but not exclusive embodiment of a die or mould for fork-shaped articles, according to the present invention.

The description shall be exposed hereafter with reference to the accompanying drawings, provided solely by way of non limiting indication, wherein:
- Figure 1 shows schematically in interrupted perspective view, partially sectioned and exploded, a die for the manufacture of fork-shaped articles according to the invention, with a fork-shaped article located between the casting dies of the die itself;
- Figure 2 shows the die in Figure 1 in closed condition on the fork-shaped article;
- Figure 3 is a section of the die performed along the trace III-III in Figure 4;
- Figure 4 is a section of the die performed along the trace IV-IV in Figure 3;
- Figure 5 is a diagram showing a top view, purely by way of indication, of the mutual relative positioning between a plurality of casting cavities set in a die according to the invention, together with respective ducts for the distribution of the molten metal.

With reference to the aforementioned figures, the number 1 indicates in its entirety a die or mould for the manufacture of fork-shaped articles according to the present invention.

In the embodiment shown the fork-shaped articles for the manufacture whereof the die 1 is employed comprise locking forks 2 for safety belt coiling devices.

Each fork 2 essentially comprises a pair of parallel arms 3, each of which presents an end connected to a corresponding end of the other arm 3 by means of a connecting bar 4. Each arm 3 presents one or more clutching teeth 5 oriented on the opposite side to the end connected to the connecting bar 3. On an outer lateral surface of each arm 3 are set at least one guiding recess 6 and a hinge pin 7 projecting perpendicularly in correspondence with the attachment end of the connecting bar 3.

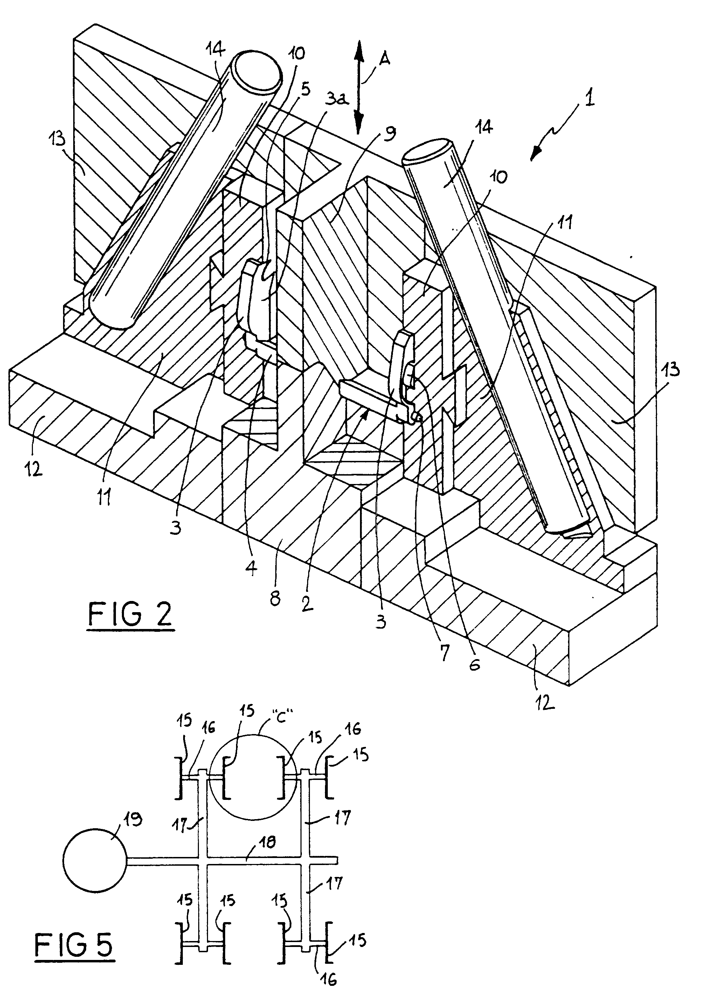

The die 1 essentially comprises a pair of inner casting dies, and more specifically a lower casting die 8 and an upper casting die 9 which, in a way known in the prior art and therefore not described in detail herein, are slidingly guided according to a first direction of mutual motion, indicated by the arrow "A" in Figure 2.

More specifically, the inner casting dies 8, 9 are mutually movable between an opening condition wherein they are appropriately distanced one from the other, and a closed condition wherein as shown in Figures 2, 3, 4 they are mutually coupled by means of respective coupling surfaces 8a, 9a mutually matched and opposed.

The die 1 further comprises a pair of lateral casting dies 10 movable in lateral approach to the inner casting dies 8, 9 and able to be coupled thereto from respectively opposite parts in correspondence with lateral junction surfaces 10a, 8b, 9b, mutually matched, presented respectively by the lateral casting dies 10 and by the inner casting dies 8, 9.

The lateral casting dies are for instance fastened to respective moving carriages 11 slidingly guided on guide portions 12 integral with the lower inner casting die 8, and operatively engaged by thrust wedges 13 and by return columns 14 rigidly engaged with respect to the upper inner casting die 9. In a way known in the prior art, the operative engagement of the carriages 11 between the slides 12 and the wedges 13 with the respective return columns 14 is such that, as a result of the mutual motion transmitted to the inner casting dies 8, 9 from the open condition to the closed condition, the lateral casting dies 10 are in turn translated from an open condition wherein they are laterally distanced from the inner casting dies 8, 9, to a closed condition wherein they are laterally approached and coupled thereto from respectively opposite parts in correspondence with the respective lateral junction surfaces 10a, 8b, 9b.

Between the inner casting dies 8, 9 and lateral casting dies 10 positioned in the closed condition is defined at least one casting cavity 15 presenting essentially at least two terminal portions 15a reproducing the profile of the arms 3 of the fork 2, and an intermediate portion 15b extending between the terminal portions 15a and reproducing the profile of the connecting bar 4.

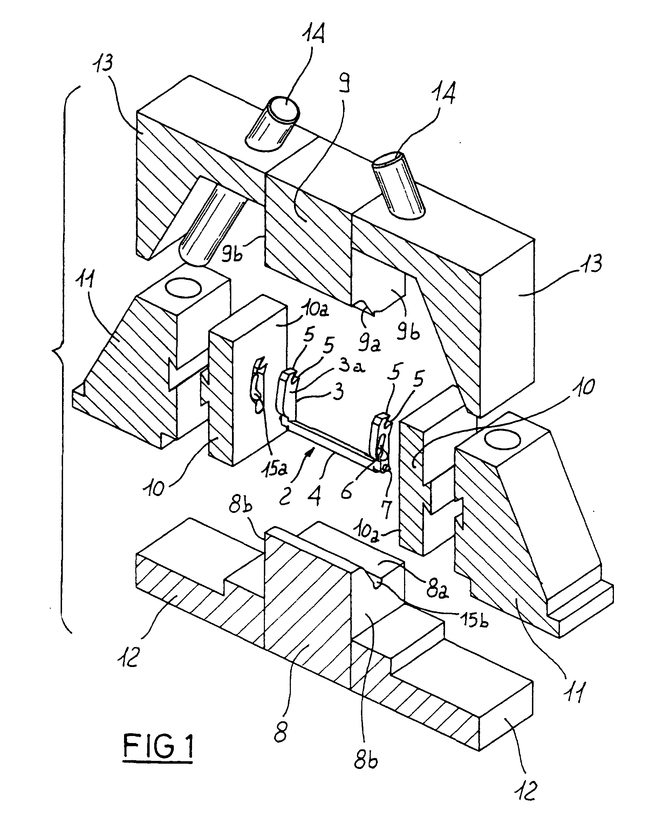

According to the present invention, each of the terminal portions 15a of the casting cavity 15 is fully defined, as is clearly shown in Figure 1, by a recess obtained in the lateral junction surface 10a of one of the lateral casting dies 10. Such recess is shaped according to the entire outer perimeter contour presented by the corresponding arm 3 of the fork 2, in a plane essentially orthogonal with respect to the direction of longitudinal development of the connecting bar 4. Moreover, the recess defining the terminal portion 15a presents a depth corresponding to the thickness of the corresponding arm 3, obtained parallel to the direction of longitudinal development of the connecting bar 4.

The intermediate portion 15b of the casting cavity 15 is in turn essentially defined by a through channel obtained between the opposite junction surfaces 8a, 9a of the inner casting dies 8, 9 and confluent with its own opposite ends into the terminal portions 15a of the casting cavity itself.

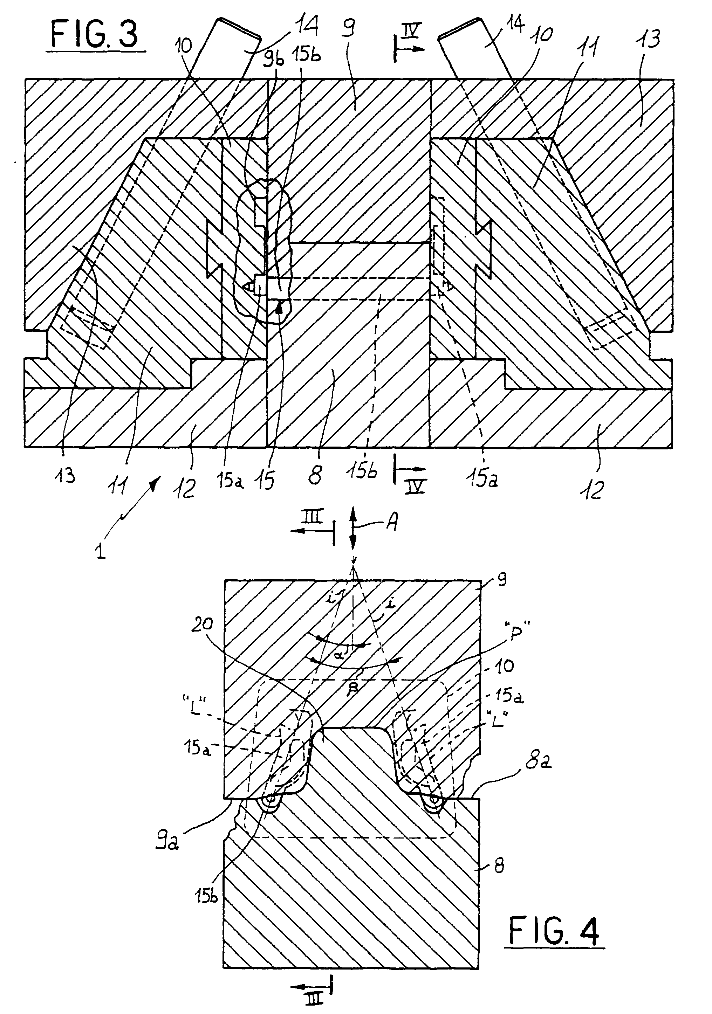

Originally and advantageously, as Figure 4 more clearly shows, the opposite junction surfaces 8a, 9a of the inner casting dies 8, 9 extend according to a coupling profile "P" completely external with respect to the perimeter development of the terminal portions 15a of the casting cavity 15. In other words, the profile "P" of mutual coupling between the inner casting dies 8, 9, seen in a section plane transverse to the longitudinal development of the connecting bar 4, extends along a line completely external to the closed line "L" defined by the perimeter development profile of each of the terminal portions 15a.

In this situation, when the die is in closed condition, the terminal portions 15a of the casting cavity 15 are completely occluded on the lateral junction surface 10a, with the exception of the area whereinto the intermediate portion 15b of the cavity itself flows, by only one of the inner casting dies 8, 9. As shown in Figures 3 and 4, the lateral junction surfaces 9b of the upper inner casting die 9 alone are able partially to close the shaped recesses defining the respective terminal portions 15a of the casting cavity 15 to define the mutually opposite inner lateral surfaces 3a of the arms 3 of the fork 2.

According with a preferential characteristic of the present invention, the median longitudinal axes of the shaped recesses defining the terminal portions 15a of the casting cavity 15 lie in a plane oriented according to an angle "α" smaller than 45° with respect to the direction of mutual motion between the inner casting dies 8, 9.

For the purposes of the present description, it should be noted that the median longitudinal axis of the terminal portions 15a of the casting cavity 15 corresponds to an ideal straight line "i" coplanar to the lateral coupling surface of the lateral casting die 10 and passing through a point coinciding with the axis of the hinge pin 7 subdividing the projection of the perimeter profile of the terminal portion 15a on the lateral coupling surface itself into two parts of equal surface extension.

In a preferential embodiment, in the die 1 is set a plurality of forming cavities 15 each obtained according to the description above.

In this circumstance, it is preferred that in each of the lateral casting dies 10 are defined at least two terminal portions 15a specularly positioned, as in Figure 4, and each paired with a respective intermediate portion 15b defined between the inner casting dies 8, 9, to form together with the intermediate portions themselves two forming cavities 15 set parallel side by side.

Preferably, the terminal portions 15a belonging to two forming cavities 15 adjacent to each other are specularly oriented with respect to one another, and present the respective median longitudinal axes "i" oriented according to an angle "β" less than 90° with respect to one another.

As clearly shown in Figure 4 according to an additional preferential characteristic of the present invention, the coupling profile of the opposite junction surfaces 8a, 9a belonging to the inner casting dies 8, 9 presents at least a cusp-shaped section 20 which defines a centring and wedging portion between the inner casting dies themselves, in an area lying between the two adjacent forming cavities.

The diagram in Figure 5 shows, by way of example, a possible mutual disposition of a plurality of forming cavities 15 in a single die 1. The area circumscribed by the circle "C" in the figure corresponds to the portion of die 1 shown in Figures 1 through 4.

As shown in Figure 5, into each of the forming cavities 15 flows, in a median area of the longitudinal development of the intermediate portion 15b, at least one injection channel 16 extending from a branch 17 of a main duct 18 connected to the injection orifice 19.

The operative forming sequence prescribes that, once the closure of the die 1 has been determined by means of mutual approach of the inner casting dies 8, 9 and of the lateral casting dies 10, a predetermined quantity of molten metal or other material is injected through the injection orifice 19 to reach the casting cavity 15 travelling through the main duct 18, the branches 17 and the inlet ducts 16. The metal or other material in the molten state injected into the forming cavities 15 is cooled until solidification to give rise to forks 2.

The arms 3 of the individual forks 2, entirely formed in the terminal portions 15a defined in the respective casting dies 10, present considerable dimensional precision which is not adversely impacted by any misalignments between the inner casting dies 8, 9 and/or lateral dies 10. Moreover, the inner lateral surface 3a of each arm 3 is completely formed against the lateral junction surface 9b of only the upper inner casting die.

This guarantees a perfect homogeneity of the inner lateral surface 3a of the arm itself and the absolute absence of burrs or other imperfections on the inner surface itself.

The present invention attains important advantages.

The elimination of the junction line of the inner casting dies 8, 9 from the area involved in the formation of the arms 3 of the fork-shaped article 2 prevents any misalignments between the inner casting dies themselves from leading, as occurs in the prior art, to geometric and/or dimensional variations of the arms themselves.

The solution proposed by the invention further allows to strengthen die 1 considerably, thanks also to the fact that the intermediate portions 15b of the forming cavities 15, obtained between the inner casting dies, present relatively reduced dimensions.

These advantages, by themselves, already enable to increase the dimensions of the die 1 and hence the number of forming cavities present therein, without penalising the quality of the finished product. However, productivity is further enhanced by the original disposition of the casting cavities 15 which, unlike the solutions of the prior art wherein the terminal portions are oriented nearly perpendicularly to the direction of approach of the inner casting dies, allow a considerable increase in the number of casting cavities 15 obtainable with the same dimensions of the die.

Also attained is the possibility to move closer, with respect to the state of the art, the mutual positioning of the forming cavities thereby also improving the fluid dynamic conditions of the molten material fed towards the forming cavities themselves.

The total absence of burrs from the inner lateral surfaces 3a of the arms 3 leads to a considerable simplification of the work processes for finishing the formed pieces which, in the prior art, notoriously require multiple trimming operations with rather complex sequences.

In sum, multiple advantages are attained in terms of improvements to the quality of the finished product, productivity enhancement, reduction of the manufacturing costs of the dies and of the end product.

## Claims

1. Die or mould for the manufacture of fork-shaped articles, each of said fork-shaped articles (2) presenting at least one pair of arms (3) mutually interconnected by a connecting bar (4), said die or mould comprising:
- at least one pair of inner casting dies (8, 9) movable in mutual approach relation and able to be coupled in correspondence with respective junction surfaces (8a, 9a) mutually matched and opposite;
- at least one pair of lateral casting dies (10) movable in lateral approach to the inner casting dies (8, 9) and able to be coupled thereto from respectively opposite parts, in correspondence with lateral junction surfaces (10a, 8b, 9b) mutually matched, presented respectively by the lateral casting dies (10) and by the inner dies (8, 9),
said inner casting dies (8, 9) and said lateral casting dies (10) being movable from an open condition wherein they are mutually distanced to a closed condition wherein they are mutually coupled to define at least one casting cavity (15) presenting at least two terminal portions (15a) reproducing the profile of the arms (3) of the fork-shaped article (2), entirely defined each in one of said lateral casting dies (10), and an intermediate portion (15b) defined between said inner casting dies (8, 9) extending between said terminal portions (15b) and reproducing the profile of said connecting bar (4) of the fork-shaped article (2),
characterised in that the opposite junction surfaces (8a, 9a) of the inner casting dies (8, 9) extend according to a coupling profile external with respect to the perimeter development of the terminal portions (15a) of the casting cavity (15).

2. Die or mould according to claim 1, wherein in the closed condition, the lateral junction surfaces (9b) of one of said inner casting dies (9) close said terminal portions (15a) to define mutually opposite inner lateral surfaces (3a) of the arms (3) of the fork-shaped article (2).

3. Die or mould according to claim 1, wherein the terminal portions (15a) of the casting cavity (15) present respective median longitudinal axes ("i") lying in a plane oriented according to an angle ("α") smaller than 45° with respect to a direction of mutual motion ("A") of the inner casting dies between the open and the closed condition.

4. Die or mould according to claim 1, wherein in each of said lateral casting dies (10) are obtained at least two of said terminal portions (15a) associated to respective intermediate portions (15b) set between the inner casting dies (8, 9), to define with them at least two forming cavities (15) set mutually side by side.

5. Die or mould according to claim 4, wherein the terminal portions (15a) set in each of the lateral casting dies (10) present respective median longitudinal axes ("i") oriented according to an angle smaller than 90° with respect to one another.

6. Die or mould according to claim 4, wherein the coupling profile ("P") of the opposite surfaces (8a, 9a) of said inner casting dies (8, 9) presents at least a cusp-shaped section (20) extending between the intermediate portions (15b) of the forming cavities (15) to define a mutual wedging and centring portion between said inner casting dies (8, 9).

7. Method for the manufacture of two-shaped articles comprising the following phases:
mutually approaching at least one pair of inner casting dies (8, 9) and a pair of lateral casting dies able to be coupled from respectively opposite parts to the inner casting dies to define at least one casting cavity (15) presenting two terminal portions (15a) reproducing the profile of the respective arms (3) of a fork-shaped article (2) and an intermediate portion (15b) extending between said terminal portions (15a) and reproducing the profile of a connecting bar (4) of said fork-shaped article (2);
filling the casting cavity (15) with a molten material; cooling the material inserted into the casting cavity until solidification,
characterised in that an inner lateral surface (3a) of each of said arms (3) is entirely formed against a lateral junction surface (9b) of one of said inner casting dies (9).

8. Method according to claim 7, wherein the mutual approach of the inner casting dies (8, 9) takes place in a direction ("A") inclined according to an angle ("α") smaller than 45° with respect to a median longitudinal axis ("i") of each of the terminal portions (15a) of the forming cavities (15).

9. Fork-shaped article made of die-cast metal obtained by means of a method according to claim 7.

## Patentansprüche

1. Form zur Herstellung von gabelförmigen Artikeln, wobei jeder dieser gabelförmigen Artikel (2) mindestens ein Paar von zueinander durch einen Verbindungsstab (4) verbundenen Armen (3) aufweist, wobei die Form umfasst:
- ein Paar von inneren Formmatrizen (8, 9), die einander anlegbar und im Bereich von jeweiligen zusammenarbeitenden und gegenüberliegenden Verbindungsflächen (8a, 9a) koppelbar sind;
- mindestens ein Paar von seitlichen Formmatrizen (10), die seitlich zu den inneren Formmatrizen (8, 9) anlegbar und mit denselben an jeweils abgewandten Seiten im Bereich von seitlichen, zusammenarbeitenden Verbindungsflächen (10a, 8b, 9b) koppelbar sind, welche die seitlichen Formmatrizen (10) und die inneren Formmatrizen (8, 9) jeweils aufweisen;
- wobei die inneren Formmatrizen (8, 9) und die seitlichen Formmatrizen (10) zwischen einer Offenstellung, in der sie voneinander beabstandet sind, und einer Schließstellung beweglich sind, in der sie miteinander gekoppelt sind, um mindestens einen Formhohlraum (15) festzulegen, der mindestens zwei Endabschnitte (15a), die das Profil der Arme (3) des gabelförmigen Artikels (2) wiedergeben, die jeweils in einem der seitlichen Formmatrizen (10) festgelegt sind, und einen Zwischenabschnitt (15b) aufweist, der zwischen den inneren Formmatrizen (8, 9) festgelegt ist, sich zwischen den Endabschnitten (15b) erstreckt und das Profil des Verbindungsstabes (4) des gabelförmigen Artikels (2) wiedergibt,
dadurch gekennzeichnet, dass die gegenüberliegenden Verbindungsflächen (8a, 9a) der inneren Formmatrizen (8, 9) sich gemäß einer Verbindungskontur erstrecken, die außerhalb der Umfangsabwicklung der Endabschnitte (15a) des Formhohlraumes (15) liegt.

2. Form nach Anspruch 1, bei der in der Schließstellung die seitlichen Verbindungsflächen (19b) einer der inneren Formmatrizen (9) die Endabschnitte (15a) schließen, um zueinander gegenüberliegende, innere Seitenflächen (3a) der Arme (3) des gabelförmigen Artikels (2) festzulegen.

3. Form nach Anspruch 1, bei der die Endabschnitte (15a) des Formhohlraumes (15) jeweilige, mittige Längsachsen ("i") aufweisen, die in einer Ebene liegen, die gemäß einer Winkelstellung ("α") ausgerichtet ist, die gegenüber der gegenseitigen Bewegung ("A") der inneren Formmatrizen zwischen der Öffnungsstellung und der Schließstellung um 45° kleiner ist.

4. Form nach Anspruch 1, bei der in jeder der seitlichen Formmatrizen (10) mindestens zwei der genannten Endabschnitte (15a) ausgenommen sind, die jeweiligen Zwischenabschnitten (15b) zugeordnet sind, die zwischen den inneren Formmatrizen (8, 9) angeordnet sind, um mit diesen letzteren mindestens drei zueinander aneinanderliegende Formhohlräume (15) festzulegen.

5. Form nach Anspruch 4, bei der die in jeder der seitlichen Formmatrizen (10) angeordneten Endabschnitte (15a), jeweilige mittige Längsachsen ("i") aufweisen, die gemäß einer Winkelstellung ausgerichtet sind, die unter 90° zueinander.

6. Form nach Anspruch 4, bei der die Verbindungskontur ("B") der gegenüberliegenden Flächen (8a, 9a) der inneren Formmatrizen (8, 9) mindestens einen spitzig ausgebildeten Teil (20) aufweist, der sich zwischen den Zwischenabschnitten (15b) der Formhohlräume (15) erstreckt, um einen gegenseitigen Einkeilungs- und Zentrierabschnitt zwischen den inneren Formmatrizen (8, 9) festzulegen.

7. Verfahren zur Herstellung von gabelförmigen Artikeln, umfassend die folgenden Schritte:
gegenseitiges Anlegen mindestens eines Paars von inneren Formmatrizen (8, 9) und eines Paars von seitlichen Formmatrizen, die an jeweils gegenüber den inneren Formmatrizen abgewandten Seiten koppelbar sind, um mindestens einen Formhohlraum (15) festzulegen, der zwei Endabschnitte (15a), die das Profil von jeweiligen Armen (3) eines gabelförmigen Artikels (2) wiedergeben, und einen Zwischenabschnitt (15b) aufweist, der sich zwischen den Endabschnitten (15a) erstreckt und das Profil eines Verbindungsstabes (4) des gabelförmigen Artikels (2) wiedergibt; Füllen des Formhohlraumes (15) mit Materialschmelze;
Abkühlen des in den Formhohlraum eingebrachten Materials bis zum Erstarren,
dadurch gekennzeichnet, dass eine innere Seitenfläche (3a) eines jeden der Arme (3) vollständig gegen eine seitliche Verbindungsfläche (9a) einer der inneren Formmatrizen (9) gebildet wird.

8. Verfahren nach Anspruch 7, bei dem das gegenseitige Anlegen der inneren Formmatrizen (8, 9) in einer Richtung ("A") erfolgt, die gemäß einem Winkel ("α") geneigt ist, der gegenüber einer mittleren Längsachse ("i") eines jeden der Endabschnitte (15a) der Formhohlräume (15) um 45° kleiner ist.

9. Gabelförmiger Artikel aus Druckgussmetall, erhalten über ein Verfahren gemäß des Anspruchs 7.

## Revendications

1. Moule pour fabriquer des articles en forme de fourche, chacun desdits articles en forme de fourche (2) présentant au moins une paire de bras (3) reliés réciproquement par une barre de liaison (4), ledit moule comportant:
- au moins une paire de matrices de moulage intérieures (8, 9) mobiles en relation de rapprochement réciproque et susceptibles d'être couplées en correspondance de surfaces de jonction (8a, 9a) respectives qui s'épousent réciproquement et sont opposées l'une à l'autre;
- au moins une paire de matrices de moulage latérales (10) mobiles de manière à se rapprocher latéralement des matrices de moulages intérieures (8, 9) et susceptibles d'être couplées à ces dernières sur des côtés respectivement opposés, en correspondance de surfaces de jonction latérales (10a, 8b, 9b) qui s'épousent réciproquement, présentées respectivement par les matrices de moulage latérales (10) et les matrices intérieures (8, 9),
lesdites matrices de moulage intérieures (8, 9) et lesdites matrices de moulage latérales (10) étant mobiles d'un condition ouverte dans laquelle elles sont espacées les unes des autres à une condition fermée dans laquelle elles sont couplées réciproquement en vue de définir au moins une cavité de formage (15) présentant au moins deux portions terminales (15a) reproduisant le profil des bras (3) de l'article en forme de fourche (2), chacune desquelles est entièrement définie dans l'une desdites matrices de moulage latérales (10), et une portion intermédiaire (15b) définie entre lesdites matrices de moulage intérieures (8, 9) s'étendant entre lesdites portions terminales (15b) et reproduisant le profil de ladite barre de liaison (4) de l'article en forme de fourche (2),
caractérisé en ce que les surfaces de jonction opposées (8a, 9a) des matrices de moulage intérieures (8, 9) s'étendent suivant un profil d'accouplement extérieur par rapport à l'extension périmétrale des portions terminales (15a) de la cavité de formage (15).

2. Moule selon la revendication 1, dans lequel, à la condition fermée, les surfaces de jonction latérales (9b) de l'une des matrices de moulage intérieures (9) ferment lesdites portions terminales (15a), dans le but de définir des surfaces latérales intérieures (3a) réciproquement opposées des bras (3) de l'article en forme de fourche (2).

3. Moule selon la revendication 1, dans lequel les portions terminales (15a) de la cavité de formage (15) présentent des axes longitudinaux médians respectifs ("i") disposés dans un plan orienté selon un angle ("α") inférieur à 45° par rapport à une direction de mouvement réciproque ("A") des matrices de moulage intérieures entre les conditions ouverte et fermée.

4. Moule selon la revendication 1, dans lequel on a obtenu dans chacune desdites matrices de moulage latérales (10) au moins deux desdites portions terminales (15a) associées à des portions intermédiaires respectives (15b) arrangées entre les matrices de moulage intérieures (8, 9), dans le but de définir avec ces dernières au moins deux cavités de formage (15) disposées réciproquement côte à côte.

5. Moule selon la revendication 4, dans lequel les portions terminales (15a) arrangées dans chacune des matrices de moulages latérales (10) présentent des axes longitudinaux médians respectifs ("i") orientés suivant un angle inférieur à 90° l'un par rapport à l'autre.

6. Moule selon la revendication 4, dans lequel le profil d'accouplement ("P") des surfaces opposées (8a, 9a) desdites matrices de moulage intérieures (8, 9) présente au moins une section en forme de cuspide (20) s'étendant entre les portions intermédiaires (15b) des cavités de formage (15), dans le but de définir une portion de coincement et de centrage réciproque entre lesdites matrices de moulage intérieures (8, 9).

7. Procédé pour la fabrication d'articles en forme de fourche, comprenant les étapes suivantes:
- rapprochement réciproque d'au moins une paire de matrices de moulage intérieures (8, 9) et d'une paire de matrices de moulage latérales susceptibles d'être couplées, sur des côtés respectivement opposées, aux matrices de moulage intérieures en vue de définir au moins une cavité de formage (15) présentant deux portions terminales (15a) reproduisant le profil des bras respectifs (3) d'un article en forme de fourche (2) et une portion intermédiaire (15b) s'étendant entre lesdites portions terminales (15a) et reproduisant le profil d'une barre de liaison (4) dudit article en forme de fourche (2);
- remplissage de la cavité de formage (15) par du matériau en fusion;
- refroidissement du matériau inséré dans la cavité de formage jusqu'à sa solidification,
caractérisé en ce qu'une surface latérale intérieure (3a) de chacun desdits bras (3) est entièrement formée contre une surface de jonction latérale (9b) de l'une desdites matrices de moulage intérieures (9).

8. Procédé selon la revendication 7, dans lequel le rapprochement réciproque des matrices de moulage intérieures (8, 9) a lieu dans une direction ("A") inclinée selon un angle ("α") inférieur à 45° par rapport à un axe longitudinal médian ("i") de chacune des portions terminales (15a) des cavités de formage (15).

9. Article en forme de fourche en métal coulé sous pression, obtenu par le procédé suivant la revendication 7.
